# EUROPÄISCHE PATENTSCHRIFT

(11) **EP 0 767 181 B1**
(45) Veröffentlichungstag und Bekanntmachung des Hinweises auf die Patenterteilung: **23.01.2002**
(21) Anmeldenummer: 96115339.2
(22) Anmeldetag: 25.09.1996
(51) Int. Cl.: C08F 8/00, C08J 9/224, C08J 9/24

(54) **Hydrophil modifiziertes pulverförmiges hoch- und/oder ultrahochmolekulares Polyethylen**
Hydrophilically modified powdered high or ultrahigh molecular weight polyethylene
Modification hydrophile de polyéthylène pulvérulent à poids moléculaire élevé ou ultra-élevé

(30) Priorität: 02.10.1995 DE 19536558
(43) Veröffentlichungstag der Anmeldung: 09.04.1997
(73) Patentinhaber: Ticona GmbH, 65451 Kelsterbach (DE)
(72) Erfinder: Barth, Christiane, 46147 Oberhausen (DE); Ehlers, Jens, Dr., 46499 Hamminkeln (DE); Haftka, Stanislaw, Dr., 46485 Wesel (DE)

(56) Entgegenhaltungen:
- EP-A- 0 114 503
- EP-A- 0 335 613
- EP-A- 0 425 886
- EP-A- 0 565 073
- EP-A- 0 594 174
- BE-A- 755 075
- CH-A- 476 776
- GB-A- 1 549 949
- US-A- 3 853 601

## Beschreibung

Die Erfindung betrifft hydrophil modifiziertes hoch- und/oder ultrahochmolekulares Polyethylen, ein Verfahren zur hydrophilen Modifizierung von hoch- und/oder ultrahochmolekularem Polyethylen (HMW-PE bzw. UHMW-PE) sowie die Verwendung des hydrophil modifizierten HMW-PE und/oder UHMW-PE zur Herstellung poröser Formteile.

Unter HMW-PE und UHMW-PE versteht man nach dem Niederdruckverfahren erhaltene lineare Polyethylene, wobei HMW-PE eine viskosimetrisch gemessenen mittleren Molmasse von 3 x 10⁵ g/mol bis 1 x 10⁶ g/mol besitzt und UHMW-PE eine viskosimetrisch gemessene mittlere Molmasse von mindestens 1 x 10⁶ g/mol und insbesondere von 2,5 x 10⁶ g/mol bis etwa 1 x 10⁷ g/mol aufweist. Ein Verfahren zur Bestimmung der Molmassen ist z.B. in CZ - Chemische Technik 4 (1974), 129ff beschrieben.

Aufgrund günstiger physikalischer, chemischer und mechanischer Eigenschaften hat UHMW-PE in den verschiedensten technischen Gebieten Eingang als hochwertiger Spezialwerkstoff gefunden. Beispiele sind die Textil-, Lebensmittel- und Verpackungsindustrie, die chemische Industrie und der Maschinenbau. Als nachteilig erweist sich bei der Verarbeitung des UHMW-PE allerdings häufig die Tatsache, daß das UHMW-PE aufgrund seiner hohen mittleren Molmasse beim Erhitzen auf Temperaturen oberhalb des Kristallitschmelzpunktes keine frei fließende Schmelze bildet, sondern in einen viskoelastischen Zustand extrem hoher Schmelzviskosität übergeht. Die Herstellung von Formkörpern aus UHMW-PE nach den für Thermoplasten gängigen Methoden ist daher oft nur unter speziellen Vorkehrungen und Modifikationen möglich. Von Vorteil ist das zuvor geschilderte thermische Verhalten des UHMW-PE dagegen für die Herstellung poröser Formteile z.B. durch Sintern. Wird das nach der Polymerisation im allgemeinen als feinkörniges Pulver anfallende UHMW-PE auf Temperaturen oberhalb des Kristallitschmelzpunktes erhitzt, so bleiben die einzelnen Körnchen im Prinzip erhalten, sie verschmelzen lediglich an den Berührungsstellen unter Ausbildung sogenannter Kontakthälse und formen einen dreidimensionalen, porösen Körper. Die Eigenschaften der porösen Körper, wie z.B. Porosität (Porengrößen, Porengrößenverteilungen), Festigkeit, Steifigkeit und Druckverlust, können durch Variation der Korngrößenverteilung des UHMW-PE-Ausgangsmaterials sowie durch den Zusatz weiterer, eine fließfähige Schmelze bildenden Komponenten wie z.B. pulverförmigem PE-Wachs oder PE-HD gezielt eingestellt werden. Darüber hinaus stellen auch die Sinterparameter Druck, Temperatur und Sinterdauer Einflußgrößen für die Eigenschaften der porösen Körper dar. HMW-PE zeigt ein ähnliches thermisches Verhalten wie UHMW-PE und läßt sich auch nach den zuvor geschilderten Verfahren zu porösen Formteilen verarbeiten.

Derart hergestellte poröse HMW-PE- bzw. UHMW-PE-Formteile finden vielfältige Anwendung. Poröse UHMW-PE-Formteile werden beispielsweise in Form von Folien und Membranen für unterschiedlichste Filter- und Trennaufgaben in vielen chemischen und biotechnischen Prozessen eingesetzt (S. Strauß, Kunststoffe 82 (1992), 338ff). Doch auch für andere Zwecke werden poröse UHMW-PE-Formteile verwendet, z.B. als Schalldämpfer in der Drucklufttechnik, zur Belüftung von Flüssigkeiten, zum Fluidisieren von Pulvern zu Transportzwecken, zur Entlüftung von Schüttgütern zwecks effektiverer Verpackung sowie als Speicher- und Dosierelemente für Farb- und Duftstoffe.

Ein Nachteil, der die Zahl der Anwendungsmöglichkeiten jedoch begrenzt, liegt darin, daß reines HMW-PE bzw.

UHMW-PE einen hydrophoben Charakter besitzt. Für bestimmte Anwendungen, besonders im Bereich der Filtertechnik, ist es erwünscht und notwendig, daß die eingesetzten porösen Materialien neben ausgezeichneten physikalischen, mechanischen und chemischen Eigenschaften insbesondere auch noch eine gewisse Wasserdurchlässigkeit und -benetzbarkeit besitzen. Werden poröse Formteile aus reinem HMW-PE oder UHMW-PE z.B. zur Filtration von wäßrigen Lösungen eingesetzt, so kommt es aufgrund der Hydrophobie zu unerwünscht hohen Druckverlusten an den Filtermedien.

Aus dem Stand der Technik ist es bekannt, poröse Formteile aus Polyolefinen durch Behandlung mit den verschiedensten Agenzien hydrophil zu modifizieren.

So beschreibt US-A-3,853,601 mikroporöse Polyolefin-Filme, die zur Hydrophilierung mit einem Silikon/Glykol-Copolymer behandelt werden. Nach US-A-4,290,987 werden ferner mikroporöse Polyolefin-Hohlfasern mit Polyvinylpyrrolidon als grenzflächenaktivem Stoff in Kontakt gebracht. Aus US-A-4,298,666 und CA-981,998 ist es außerdem bekannt, Phosphatester wie ethoxyliertes 2-Ethylhexylphosphat, Imidazoline, Fettsäuren und ihre Alkalimetallsalze sowie verschiedene Fettamine zur hydrophilen Behandlung mikroporöser Polyolefin-Filme einzusetzen.

Bei derart vorgenommenen hydrophilen Modifizierungen an bereits geformten porösen Produkten tritt jedoch das Problem auf, daß häufig keine gleichmäßige und vollständige Hydrophilierung der gesamten Oberfläche erzielt wird. Zudem erfüllt die Hydrophilierung wegen mangelnder Adhäsion der Hydrophilierungsagenzien am porösen Polyolefinwerkstoff nicht immer die Anforderung, hinreichend beständig im Kontakt mit hydrophilen Medien zu sein. Werden solche porösen Formteile z.B. über längere Zeit und gegebenenfalls bei höherer Temperatur mit Wasser behandelt, so kommt es zur Auswaschung der aufgebrachten Hydrophilierungsagenzien und damit zum schnellen Verlust der Hydrophilie.

Eine Möglichkeit, speziell aus UHMW-PE poröse Formteile mit einer hydrophilen Oberfläche herzustellen, besteht darin, bei dieser Herstellung UHMW-PE-Pulver einzusetzen, welches zuvor bereits hydrophil modifiziert wurde. So beschreibt DE-OS-42 43 577 ein Verfahren zur Hydrophilierung von UHMW-PE, bei dem das pulverförmige Polymerisat bei Temperaturen von 0 bis 80°C mit einem Gemisch aus einem Inertgas und Schwefeltrioxid behandelt (gebeizt) wird, vorzugsweise in Gegenwart eines Alkali- oder Erdalkalisalzes einer aliphatischen oder aromatischen Mono- oder Dicarbonsäure. Durch den Beizvorgang werden die einzelnen Polymerisatteilchen mit polaren Gruppen versehen. Derart modifizierte UHMW-PE-Pulver können anschließend durch Sintern zu porösen Formteilen weiterverarbeitet werden. Die Hydrophilie leidet jedoch durch die thermische Beanspruchung beim Sintern stark. Hinzu kommt, daß bereits bei der Beizung des UHMW-PE-Pulvers Nebenprodukte anfallen.

Aufgabe der vorliegenden Erfindung war es, hydrophil modifiziertes HMW-PE und/oder UHMW-PE zur Verfügung zu stellen, dessen hydrophile Modifizierung eine erhöhte Langzeit- und Temperaturbeständigkeit beim Kontakt mit hydrophilen Medien aufweist.

Gegenstand der Erfindung ist hydrophil modifiziertes HMW-PE und/oder UHMW-PE, dadurch gekennzeichnet, daß es mit einer Mischung beschichtet ist enthaltend
A) 1 - 99,9 Gew.-% mindestens eines wasserlöslichen Additivs und
B) 0,1 - 99 Gew.-% mindestens eines wasserunlöslichen Additivs,
wobei der Anteil der Mischung 0,1 -10 Gew.-%, bezogen auf das Gesamtgewicht des hydrophil modifizierten HMW-PE und/oder UHMW-PE, beträgt.

Unter den wasserlöslichen Additiven (Komponente A) werden allgemein Benetzungsmittel wie wasserlösliche Tenside oder wasserlösliche Polyalkylenglykole verstanden.

Als wasserlösliche Tenside können anionische, kationische und nichtionische Tenside eingesetzt werden, besonders geeignet sind vor allem wasserlösliche Aniontenside, die als funktionelle Gruppen Carboxylat-, Sulfonat- oder Sulfat-Gruppen aufweisen.

Als Aniontenside sind beispielsweise wasserlösliche Alkylbenzolsulfonate, Alkansulfonate, Fettalkoholsulfate, Fettalkoholethersulfate, α-Olefinsulfonate, α-Estersulfonate, Alkylphosphate oder Alkyletherphosphate einsetzbar. Bevorzugt werden wasserlösliche Alkansulfonate, insbesondere solche mit 13 - 17 C-Atomen.

Als wasserlösliche nichtionische Tenside können ferner wasserlösliche Fettalkoholethoxylate, Alkylphenolethoxylate, Fettaminethoxylate, Fettsäureethoxylate, Fettsäureesterethoxylate oder Alkanolamine eingesetzt werden.

Als wasserlösliche Polyalkylenglykole werden bevorzugt wasserlösliche Polyethylenglykole und/oder ihre entsprechenden Mono- oder Di-C₁-C₁₃-Alkylether eingesetzt, wobei die Alkylreste verzweigt oder unverzeigt sein können, wie z.B. der Methyl-, Ethyl-, Propyl-, n-Butyl-, i-Butyl-, Tridecyl- oder der vom Pentaerythrit abgeleitete Rest. Besonders bevorzugt sind flüssige, wasserlösliche Polyethylenglykole sowie ihre entsprechenden Mono- oder Diether mit einer mittleren Molmasse (Mₙ) von bis zu 600 g/mol. Wachsartige oder feste Polyethylenglykole höherer mittlerer Molmasse können auch verwendet werden, sofern sie wasserlöslich sind. Bei den eingesetzten Polyalkylenglykolen handelt es sich wie bei allen polymeren Substanzen nicht um chemisch einheitliche Verbindungen mit einer definierten Molmasse, sondern vielmehr um Gemische von Polymerhomologen, die sich durch ihren Polymerisationsgrad voneinander unterscheiden.

Als Komponente B wird ein wasserunlösliches Additiv eingesetzt. Hierbei handelt es sich um Benetzungsmittel in Form von wasserunlöslichen Polyalkylenglykolen und/oder ihren entsprechenden wasserunlöslichen Mono- oder Di-C₁-C₁₃-Alkylethern, wobei die Alkylreste verzweigt oder unverzweigt sein können, wie z.B. der Methyl-, Ethyl-, Propyl-, n-Butyl-, i-Butyl-, Tridecyl- oder der vom Pentaerythrit abgeleitete Rest. Bevorzugt sind Polypropylenglykole und/oder ihre entsprechenden Mono- oder Diether mit mindestens 4 und insbesondere 4-44 Propylenglykol-Wiederholungseinheiten in der Polymerhauptkette, besonders bevorzugt wird ein Polypropylenglykolmonobutylether mit mindestens 4 und insbesondere 4 - 44 Propylenglykol-Wiederholungseinheiten in der Polymerhauptkette.

Als wasserunlöslich werden dabei Additive bezeichnet, die bei Raumtemperatur mit weniger als 0,1 Gew.-teil in 100 Gew.-teilen Wasser löslich sind.

Als Komponenten A und B werden solche Additive bevorzugt eingesetzt, die bei Raumtemperatur flüssig sind; es können jedoch auch bei Raumtemperatur feste Substanzen eingesetzt werden. Besonders geeignet sind ferner Komponenten A und B, die bei den Temperaturen thermostabil sind, bei denen das hydrophil modifizierte HMW-PE und/oder UHMW-PE zu porösen Formteilen weiterverarbeitet wird. Thermostabil bedeutet hierbei, daß der hydrophile Charakter auch nach der Verarbeitung zu porösen Formteilen noch vorhanden ist. Bei einer Weiterverarbeitung durch Sinterung liegen die angewandten Temperaturen im allgemeinen im Bereich von 180-220°C.

Das hydrophil modifizierte HMW-PE und/oder UHMW-PE ist erfindungsgemäß mit einer Mischung beschichtet, die 1 - 99,9 Gew.-%, bevorzugt 5 - 90 Gew.-%, besonders bevorzugt 10 - 50 Gew.-% und insbesondere 10 - 25 Gew.-% der Komponente A und 0,1 - 99 Gew.-%, bevorzugt 10 - 95 Gew.-%, besonders bevorzugt 50 - 90 Gew.-% und insbesondere 75 - 90 Gew.-% der Komponente B enthält, wobei der Anteil der Mischung 0,1 - 10 Gew.-%, bevorzugt 0,5 - 5 Gew.-%, besonders bevorzugt 0,7 - 2 Gew.-% und insbesondere 0,8 - 1,2 Gew.-%, bezogen auf das Gesamtgewicht des hydrophil modifizierten HMW-PE und/oder UHMW-PE, beträgt. Bevorzugt ist das hydrophil modifizierte HMW-PE und/oder UHMW-PE pulverförmig.

Gegenstand der Erfindung ist ferner ein Verfahren zur hydrophilen Modifizierung von bevorzugt pulverförmigem HMW-PE und/oder UHMW-PE, dadurch gekennzeichnet, daß das HMW-PE und/oder UHMW-PE mit einer Mischung behandelt wird, welche 1 - 99,9 Gew.-% mindestens eines wasserlöslichen Additivs (Komponente A) und 0,1 - 99 Gew.-% mindestens eines wasserunlöslichen Additivs (Komponente B) enthält, wobei die Mischung mit 0,1 - 10 Gew.-%, bezogen auf das Gesamtgewicht aus Mischung und HMW-PE und/oder UHMW-PE, eingesetzt wird.

Im erfindungsgemäßen Verfahren zur hydrophilen Modifizierung von HMW-PE und/oder UHMW-PE können alle Arten von HMW-PE und/oder UHMW-PE eingesetzt werden, unabhängig von der Art ihrer Herstellung. Dementsprechend lassen sich Polymerisate verwenden, die nach dem Ziegler-Prozeß durch Polymerisation von Ethylen in Gegenwart von Metallen der Gruppen IVB - VIB des Periodensystems der Elemente (IUPAC-Version) zusammen mit metallorganischen Verbindungen der Elemente der Gruppen IA - IIIA des Periodensystems der Elemente (IUPAC-Version) erhalten werden. Ebenso können aber auch hoch- und/oder ultrahochmolekulare Polyethylene eingesetzt werden, deren Herstellung aus wasserfreiem und sauerstofffreiem Ethylen in der Gasphase in Gegenwart Chromoxid und Metallalkyl enthaltender Trägerkatalysatoren erfolgt. HMW-PE bzw. UHMW-PE besitzt in der Regel einen mittleren Korndurchmesser von 3 - 3000 µm, bevorzugt 10 - 1000 µm und insbesondere 30 - 300 µm mit verschiedensten Korngrößenverteilungen.

Die zur Behandlung des HMW-PE und/oder UHMW-PE eingesetzte Mischung der Komponenten A und B enthält 1 - 99,9 Gew.-% der Komponente A und 0,1 - 99 Gew.-% der Komponente B, bevorzugt 5 - 90 Gew.-% der Komponente A und 10 - 95 Gew.-% der Komponente B, besonders bevorzugt 10 - 50 Gew.-% der Komponente A und 50 - 90 Gew.-% der Komponente B und insbesondere 10 - 25 Gew.-% der Komponente A und 75 - 90 Gew.-% der Komponente B. Diese Mischung der Komponenten A und B wird bei Raumtemperatur unter Rühren mit dem HMW-PE und/oder UHMW-PE innig vermischt. Die Mischung der Komponenten A und B wird dabei mit 0,1 - 10 Gew.-%, bevorzugt 0,5 - 5 Gew.-%, besonders bevorzugt 0,7 - 2 Gew.-% und insbesondere 0,8 - 1,2 Gew.-%, bezogen auf das Gesamtgewicht aus Mischung (A + B) und HMW-PE und/oder UHMW-PE, eingesetzt. Mit steigendem Gew.-%-Anteil der Komponenten A und B fühlt sich die Oberfläche des hydrophil modifizierten HMW-PE und/oder UHMW-PE leicht seifig an.

Bei dem erfindungsgemäßen Verfahren werden die gesamten eingesetzten Mengen der Komponenten A und B auf dem HMW-PE und/oder UHMW-PE abgelagert. Ein Verlust an Beschichtungsmittel tritt nicht ein. Bei der Beschichtung des HMW-PE- und/oder UHMW-PE kommt es zu einer Ummantelung des HMW-PE und/oder UHMW-PE, die auch als coating angesehen werden kann.

In einer bevorzugten Ausführungsform des Verfahrens wird die Mischung der Komponenten A und B nicht sofort mit der gesamten vorgesehenen Menge an HMW-PE und/oder UHMW-PE in Kontakt gebracht, es erfolgt vielmehr in einem 1. Schritt zunächst die Herstellung eines Batches. Hierzu wird die gesamte Menge der Mischung aus A und B bei Raumtemperatur zunächst nur mit einer kleineren Menge HMW-PE und/oder UHMW-PE vermischt, bis eine homogene Verteilung der Komponenten A und B im HMW-PE und/oder UHMW-PE erreicht ist. Dieses Batch wird dann im 2. Schritt mit der restlichen Menge an HMW-PE und/oder UHMW-PE versetzt. Bevorzugt wird im 1. Schritt die gesamte Menge der Mischung aus A und B mit einer solchen Menge HMW-PE und/oder UHMW-PE gemischt, daß das entstehende Batch zu 5 - 30 Gew.-% und insbesondere zu 10 Gew.-% aus der Mischung der Komponenten A und B und zu 70 - 95 Gew.-% bzw. insbesondere zu 90 Gew.-% aus HMW-PE und/oder UHMW-PE besteht. Anschließend wird in diese Vormischung aus A, B, HMW-PE und/oder UHMW-PE die restliche Menge des HMW-PE und/oder UHMW-PE eingemischt.

Gegebenenfalls können die Komponenten A und B auch in jeweils geeigneten Lösungsmitteln gelöst eingesetzt werden. Hierunter werden Lösungsmittel verstanden, die das HMW-PE und/oder UHMW-PE nicht angreifen. Diese Verfahrensvariante wird insbesondere dann angewandt, wenn die beiden Komponenten A und B bei Raumtemperatur als Pulver, d.h. in fester Form, vorliegen.

In einer weiteren Ausführungsform des erfindungsgemäßen Verfahrens wird das pulverförmige HMW-PE und/oder UHMW-PE zuerst mit der Komponente A vermischt und anschließend mit der Komponente B.

Ein weiterer Gegenstand der Erfindung ist die Verwendung des hydrophil modifizierten HMW-PE und/oder UHMW-PE zur Herstellung von Formteilen, insbesondere porösen Formteilen. Bevorzugt erfolgt die Herstellung der porösen Fomteile durch Sinterverfahren. Zum Einsatz kommt hierbei insbesondere pulverförmiges HMW-PE und/oder UHMW-PE, welches mit Komponenten A und B beschichtet ist, die bei der Sintertemperatur, d.h. bei 180 - 220°C thermostabil sind. Die Sinterung kann nach den für HMW-PE bzw. UHMW-PE üblichen Verfahren durchgeführt werden. Hierbei ist es von Vorteil, daß die Rieselfähigkeit des hydrophil modifizierten Pulvers kaum geringer ist als die von reinem HMW-PE- bzw. UHMW-PE-Pulver. Das modifizierte Pulver läßt sich somit ohne Probleme mit gebräuchlichen Verfahren verarbeiten.

Die hydrophile Modifizierung, d.h. die Beschichtung des HMW-PE- und/oder UHMW-PE-Pulvers mit der Mischung der Komponenten A und B wird durch den Sintervorgang nicht geschädigt oder beeinträchtigt.

Auf diesem Weg können somit unter Einsatz des erfindungsgemäß modifizierten HMW-PE und/oder UHMW-PE poröse Formteile erhalten werden, die zum einen das ausgezeichnete Eigenschaftsprofil des reinen unmodifizierten HMW-PE und/oder UHMW-PE aufweisen und deren hydrophile Modifizierung zum anderen auch im Langzeitkontakt und bei höheren Temperaturen eine ausgezeichnete Resistenz gegenüber hydrophilen Medien besitzt.

In den nachfolgenden Beispielen wird die Effektivität der Hydrophilierung und die Resistenz gegenüber Auswaschen getestet.

### Beispiele 1 - 6

### Vergleichsbeispiel V1

Hydrophile Modifizierung von pulverförmigem UHMW-PE.

Pulverförmiges UHMW-PE (® Hostalen GUR 4120) wird bei Raumtemperatur mit verschieden zusammengesetzten Mischungen von Komponenten A und B behandelt. Als Komponente A wird ® Hostapur SAS 30, ein wasserlösliches Alkansulfonat, und als Komponente B ® Polyglykol B01/20, ein Polypropylenglykolmonobutylether mit einer Viskosität von 20 mm²/s bei 50°C, eingesetzt. Sämtliche Bestandteile sind Handelsprodukte der Hoechst AG, Frankfurt am Main, Bundesrepublik Deutschland.

Die jeweilige Zusammensetzung der Mischung ist aus Tabelle 1 ersichtlich.

In den Beispielen 1 - 6 wird die gesamte Menge der Mischung der Komponenten A und B bzw. im Vergleichsbeispiel die gesamte Menge der Komponente B mit Hostalen GUR 4120 bei Raumtemperatur vermischt, so daß das resultierende Batch zu 10 Gew.-% aus der Mischung der Komponenten A und B und zu 90 Gew.-% aus Hostalen GUR 4120 besteht. Dieses Batch wird dann mit weiterem Hostalen GUR 4120 vermischt, bis der Anteil der Mischung an der Summe aus Mischung und UHMW-PE 1 Gew.-% (Beispiele 1 - 5 und Vergleichsbeispiel 1) bzw. 0,5 Gew.-% (Beispiel 6) beträgt.

Aus diesem beschichteten UHMW-PE-Pulver werden durch Sintern über einen Zeitraum von 30 min bei einer Temperatur von 220°C unter atmosphärischem Druck in einem Sinterwerkzeug aus Stahl mit einem Durchmesser von 170 mm und einer Dicke von 7 mm poröse kreisförmige Platten hergestellt.

Zur Austestung der Güte und Permanenz der hydrophilen Modifizierung werden diese Platten dem folgenden Verfahren ausgesetzt:
1. Die Platten werden gewogen und solange bei Raumtemperatur in einem Wasserbad belassen, bis keine Gewichtszunahme mehr zu beobachten ist. Die Gewichtszunahme in %, bezogen auf das Ausgangsgewicht, ist in Tabelle 1 in Reihe: "Kochzeit 0 Minuten" angegeben.
2. Die Platten werden daraufhin 10 min in kochendem Wasser belassen und anschließend in einem Umlufttrockenschrank bei 70°C bis zur Gewichtskonstanz getrocknet.
3. Anschließend werden die Platten bei Raumtemperatur solange in Wasser belassen, bis keine Gewichtszunahme mehr zu beobachten ist. Die Gewichtszunahme, bezogen auf das unter Punkt 2 bestimmte Gewicht ist in Tabelle 1 in der Reihe:" Kochzeit 10 min" angegeben.
4. Die Platten werden erneut in einem Umlufttrockenschrank bei 70°C bis zur Gewichtskonstanz getrocknet.
5. Die Schritte 2, 3 und 4 werden noch zwei Mal durchgeführt. Die jeweilige Gewichtszunahme der Platten durch Wasseraufnahme nach insgesamt 20 bzw. 30 min Kochzeit sind aus Tabelle 1 zu entnehmen.

Erkennbar ist, daß die Platten auch nach 30 min Kochzeit in Wasser noch einen deutlichen hydrophilen Charakter besitzen.

### Beispiel 7

Langzeitprüfung des hydrophilen Charakters einer Platte aus hydrophil modifiziertem UHMW-PE.

99 Gew.-% pulverförmiges UHMW-PE (® Hostalen GUR 2122 der Firma Hoechst) werden bei Raumtemperatur mit 1 Gew.-% einer Mischung bestehend aus 10 Gew.-%, bezogen auf die Mischung, Hostapur SAS 30 und 90 Gew.-%, bezogen auf die Mischung, Polyglykol B01/20 behandelt.

Aus dem erhaltenen hydrophil modifizierten UHMW-PE wird gemäß den Beispielen 1-6 durch Sinterung eine Platte hergestellt. Diese Platte wird nun solange bei Raumtemperatur in einem Wasserbad belassen, bis keine Gewichtszunahme mehr zu beobachten ist. Die Gewichtszunahme in %, bezogen auf das Ausgangsgewicht, ist in Tabelle 2 in der Reihe "O (1. Benetzung)" wiedergegeben. Anschließend wird die Platte bei 70°C im Umlufttrockenschrank bis zur Gewichtskonstanz getrockent. Die Platte wird daraufhin einen Monat lang bei Raumtemperatur in Wasser gelagert. Das Wasser wird dabei täglich gewechselt. Die Platte wird nach dem in Tabelle 2 aufgeführten Zeitabschnitten jeweils aus dem Becken genommen, bei 70°C im Umlufttrockenschrank bis zur Gewichtskonstanz getrocknet und anschließend erneut im Wasserbad gelagert. Die dann eintretende Wasseraufnahme wird durch Auswiegen ermittelt. Die erhaltenen Werte sind in Tabelle 2 aufgeführt.

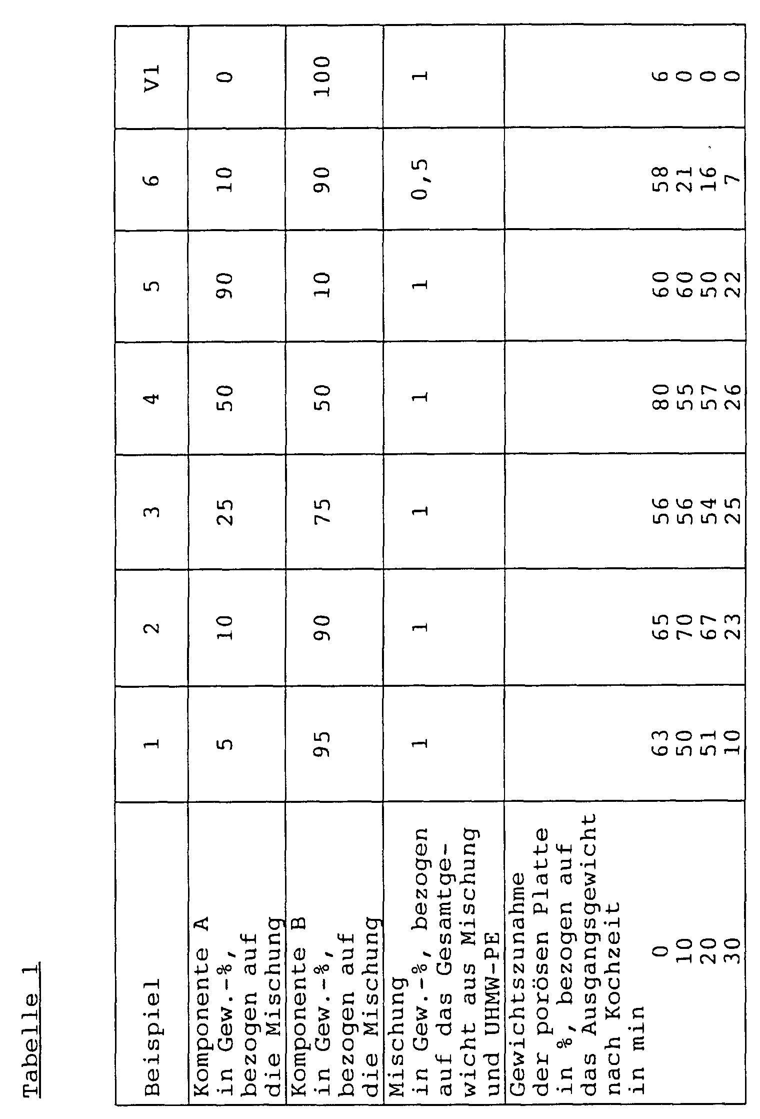

**Tabelle 2**

| Beispiel | 7 |
|---|---|
| Wasserlagerung der Platte in Tagen | Gewichtszunahme in % bezogen auf das Ausgangsgewicht |
| 0 (1. Benetzung) | 180 |
| 0.3 | 180 |
| 1.5 | 150 |
| 2 | 150 |
| 3 | 150 |
| 7 | 95 |
| 14 | 90 |
| 21 | 85 |
| 28 | 60 |

## Patentansprüche

1. Hydrophil modifiziertes HMW-PE und/oder UHMW-PE, **dadurch gekennzeichnet, daß** es mit einer Mischung beschichtet ist enthaltend
A) 1 - 99,9 Gew.-%, bevorzugt 5 - 90 Gew.-% und besonders bevorzugt 10 - 50 Gew.-% mindestens eines wasserlöslichen Additivs, welches ein Benetzungsmittel ist, und
B) 0,1 - 99 Gew.-%, bevorzugt 10 - 95 Gew.-% und besonders bevorzugt 50-90 Gew.-% mindestens eines wasserunlöslichen Additivs, welches ein Polyalkylenglykol und/oder ein entsprechender Mono- oder Di-C₁ - C₁₃ - Alkylether ist und bei Raumtemperatur mit weniger als 0,1 Gew.-teilen in 100 Gew.-teilen Wasser löslich ist, wobei der Anteil der Mischung 0,1 - 10 Gew.-%, bevorzugt 0,5 - 5 Gew.-% und besonders bevorzugt 0,7 - 2 Gew.-%, bezogen auf das Gesamtgewicht des hydrophil modifizierten HMW-PE und/oder UHMW-PE, beträgt.

2. Hydrophil modifiziertes HMW-PE und/oder UHMW-PE nach Anspruch 1, **dadurch gekennzeichnet, daß** es pulverförmig ist.

3. Hydrophil modifizierte HMW-PE und/oder UHMW-PE nach Anspruch 1 oder 2, **dadurch gekennzeichnet, daß** als Komponente A wasserlösliche Tenside oder wasserlösliche Polyakylenklykole verwendet werden.

4. Hydrophil modifiziertes HMW-PE und/oder UHMW-PE nach Anspruch 3, **dadurch gekennzeichnet, daß** als Komponente A ein wasserlösliches Aniontensid eingesetzt wird.

5. Hydrophil modifiziertes HMW-PE und/oder UHMW-PE nach Anspruch 3, **dadurch gekennzeichnet, daß** als Komponente A wasserlösliche Alkansulfonate eingesetzt werden.

6. Hydrophil modifiziertes HMW-PE und/oder UHMW-PE nach Anspruch 3, **dadurch gekennzeichnet, daß** als Komponente A wasserlösliche Alkansulfonate mit 13 - 17 C-Atomen eingesetzt werden.

7. Hydrophil modifiziertes HMW-PE und/oder UHMW-PE nach Anspruch 3, **dadurch gekennzeichnet, daß** als Komponente A wasserlösliche Polyethylenglykole und/oder deren Monoi- oder Di-C₁-C₁₃-Alkylether eingesetzt werden.

8. Hydrophil modifiziertes HMW-PE und/oder UHMW-PE nach Anspruch 1, **dadurch gekennzeichnet, daß** als Komponente B ein wasserunlöslicher Polypropylenglykolmonobutylether mit mindestens 4 Propylenglykol-Wiederholungseinheiten in der Polymerhauptkette eingesetzt wird.

9. Hydrophil modifiziertes HMW-PE und/oder UHMW-PE nach einem oder mehreren der Ansprüche 1-8, **dadurch gekennzeichnet, daß** die Komponenten A und B der Mischung bei Raumtemperatur flüssig sind.

10. Verfahren zur hydrophilen Modifizierung von bevorzugt pulverförmigen HMW-PE und/oder UHMW-PE, **dadurch gekennzeichnet, daß** HMW-PE und/oder UHMW -PE mit 0,1 - 10 Gew.-%, bevorzugt 0,5 - 5 Gew.-% und besonders bevorzugt 0,7 - 2 Gew.-% einer Mischung, bezogen auf das Gesamtgewicht aus der Mischung und HMW-PE und/oder UHMW-PE, behandelt wird, wobei diese Mischung
A) 1 - 99,9 Gew.-%, bevorzugt 5 - 90 Gew.-%, besonders bevorzugt 10 - 50 Gew.-% und insbesondere 10 - 25 Gew.-% mindestens eines wasserlöslichen Additivs, welches ein Benetzungsmittel ist, und
B) 0,1 - 99 Gew.-%, bevorzugt 10-95 Gew.-%, besonders bevorzugt 50 - 90 Gew.-% und insbesondere 75 - 90 Gew.-% mindestens eines wasserunlöslichen Additivs, welches ein Polyalkylenglykol und/ oder ein entsprechender Mono- oder Di- C₁ - C₁₃-Alkylether ist und bei Raumtemperatur mit weniger als 0,1 Gew.-teilen in 100 Gew.-teilen Wasser löslich ist, enthält.

11. Verwendung des hydrophil modifizierten HMW-PE und/ oder UHMW-PE nach einem oder mehreren der Ansprüche 1-9 zur Herstellung von Formteilen.

12. Verwendung des hydrophil modifizierten HMW-PE und/öder UHMW-PE nach Anspruch 11 zur Herstellung von porösen Formteilen.

13. Verwendung des hydrophil modifizierten HMW-PE und/oder UHMW-PE nach Anspruch 12, **dadurch gekennzeichnet, daß** die Herstellung der porösen Formteile durch Sintierung erfolgt.

14. Formteile aus hydrophil modifiziertem HMW-PE und/oder UHMW-PE nach einem oder mehreren der Ansprüche 1-9.

15. Formteile aus hydrophil modifiziertem HMW-PE und/oder UHMW-PE nach Anspruch 14, **dadurch gekennzeichnet, daß** sie porös sind.

## Claims

1. A hydrophilically modified HMW-PE and/or UHMW-PE, which is coated with a mixture comprising
A) 1 - 99.9 % by weight, preferably 5 - 90 % by weight and particularly preferably 10 - 50 % by weight, of at least one water-soluble additive which is a wetting agent and
B) 0.1 - 99 % by weight, preferably 10 - 95 % by weight and particularly preferably 50 - 90 % by weight, of at least one water-insoluble additive which is a polyalkylene glycol and/or a corresponding mono- or di-C₁-C₁₃-alkyl ether and is soluble to the extent of less than 0.1 part by weight in 100 parts by weight of water at room temperature, the content of the mixture being 0.1 - 10 % by weight, preferably 0.5 - 5 % by weight and particularly preferably 0.7 - 2 % by weight, based on the total weight of hydrophilically modified HMW-PE and/or UHMW-PE.

2. A hydrophilically modified HMW-PE and/or UHMW-PE as claimed in claim 1, which is pulverulent.

3. A hydrophilically modified HMW-PE and/or UHMW-PE as claimed in claim 1 or 2, wherein a water-soluble surfactant or water-soluble polyalkylene glycol is used as component A.

4. A hydrophilically modified HMW-PE and/or UHMW-PE as claimed in claim 3, wherein a water-soluble anionic surfactant is employed as component A.

5. A hydrophilically modified HMW-PE and/or UHMW-PE as claimed in claim 3, wherein a water-soluble alkane-sulfonate is employed as component A.

6. A hydrophilically modified HMW-PE and/or UHMW-PE as claimed in claim 3, wherein a water-soluble alkane-sulfonate having 13 - 17 carbon atoms is employed as component A.

7. A hydrophilically modified HMW-PE and/or UHMW-PE as claimed in claim 3, wherein a water-soluble polyethylene glycol and/or a mono- or di-C₁-C₁₃-alkyl ether thereof is employed as component A.

8. A hydrophilically modified HMW-PE and/or UHMW-PE as claimed in claim 1, wherein a water-insoluble polypropylene glycol monobutyl ether having at least 4 propylene glycol recurring units in the main polymer chain is employed as component B.

9. A hydrophilically modified HMW-PE and/or UHMW-PE as claimed in one or more of claims 1 - 8, wherein components A and B of the mixture are liquid at room temperature.

10. A process for hydrophilic modification of preferably pulverulent HMW-PE and/or UHMW-PE, which comprises treating HMW-PE and/or UHMW-PE with 0.1 - 10 % by weight, preferably 0.5 - 5 % by weight and particularly preferably 0.7 - 2 % by weight, of a mixture, based on the total weight of the mixture and HMW-PE and/or UHMW-PE, this mixture comprising
A) 1 - 99.9 % by weight, preferably 5 - 90 % by weight, particularly preferably 10 - 50 % by weight and in particular 10 - 25 % by weight, of at least one water-soluble additive which is a wetting agent and
B) 0.1 - 99 % by weight, preferably 10 - 95 % by weight, particularly preferably 50 - 90 % by weight and in particular 75 - 90 % by weight, of at least one water-insoluble additive which is a polyalkylene glycol and/or a corresponding mono- or di-C₁-C₁₃-alkyl ether and is soluble to the extent of less than 0.1 part by weight in 100 parts by weight of water at room temperature.

11. The use of the hydrophilically modified HMW-PE and/or UHMW-PE as claimed in one or more of claims 1 - 9, for the production of moldings.

12. The use of the hydrophilically modified HMW-PE and/or UHMW-PE as claimed in claim 11, for the production of porous moldings.

13. The use of the hydrophilically modified HMW-PE and/or UHMW-PE as claimed in claim 12, wherein the production of porous moldings is carried out by sintering.

14. A molding of hydrophilically modified HMW-PE and/or UHMW-PE as claimed in one or more of claims 1 - 9.

15. A molding of hydrophilically modified HMW-PE and/or UHMW-PE as claimed in claim 14, which is porous.

## Revendications

1. PE-PME et/ou PE-PMUE modifié de manière hydrophile, **caractérisé en ce qu'**il est revêtu d'un mélange contenant
A) 1 à 99,9% en poids, de préférence 5 à 90% en poids et de manière particulièrement préférée 10 à 50% en poids, d'au moins un additif soluble dans l'eau, qui est un mouillant, et
B) 0,1 à 99% en poids, de préférence 10 à 95% en poids et de manière particulièrement préférée 50 à 90% en poids, d'au moins un additif insoluble dans l'eau, qui est un polyalkylèneglycol et/ou un mono-(alkyle en C₁ à C₁₃)éther ou un di-(alkyle en C₁ à C₁₃) éther correspondant et qui est soluble à température ambiante à moins de 0,1 partie en poids dans 100 parties en poids d'eau, la proportion du mélange étant de 0,1 à 10% en poids, de préférence de 0,5 à 5% en poids et de manière particulièrement préférée de 0,7 à 2% en poids, par rapport au poids total du PE-PME et/ou PE-PMUE modifié de manière hydrophile.

2. PE-PME et/ou PE-PMUE modifié de manière hydrophile selon les revendications 1 ou 2, **caractérisé en ce qu'**il est sous forme de poudre.

3. PE-PME et/ou PE-PMUE modifié de manière hydrophile selon les revendications 1 ou 2, **caractérisé en ce qu'**on utilise comme composants A des agents tensioactifs solubles dans l'eau ou des polyalkylèneglycols solubles dans l'eau.

4. PE-PME et/ou PE-PMUE modifié de manière hydrophile selon la revendication 3, **caractérisé en ce qu'**on utilise comme composants A un agent tensioactif anionique soluble dans l'eau.

5. PE-PME et/ou PE-PMUE modifié de manière hydrophile selon la revendication 3, **caractérisé en ce qu'**on utilise comme composants A des alcanesulfonates solubles dans l'eau.

6. PE-PME et/ou PE-PMUE modifié de manière hydrophile selon la revendication 3, **caractérisé en ce qu'**on utilise comme composants A des alcanesulfonates solubles dans l'eau contenant 13 à 17 atomes de carbone.

7. PE-PME et/ou PE-PMUE modifié de manière hydrophile selon la revendication 3, **caractérisé en ce qu'**on utilise comme composants A des polyéthylèneglycols solubles dans l'eau et/ou leurs mono-(alkyle en C₁ à C₁₃)éthers ou di-(alkyle en C₁ à C₁₃)éthers solubles dans l'eau.

8. PE-PME et/ou PE-PMUE modifié de manière hydrophile selon la revendication 1, **caractérisé en ce qu'**on utilise comme composant B un polypropylèneglycolmonobutyléther insoluble dans l'eau comprenant au moins 4 unités répétées de propylèneglycol dans la chaîne principale du polymère.

9. PE-PME et/ou PE-PMUE modifié de manière hydrophile selon l'une ou plusieurs des revendications 1 à 8, **caractérisé en ce que** les composants A et B du mélange sont liquides à température ambiante.

10. Procédé pour la modification hydrophile de PE-PME et/ou PE-PMUE de préférence sous forme de poudre, **caractérisé en ce que** le PE-PME et/ou le PE-PMUE est traité avec 0,1 à 10% en poids, de préférence avec 0,5 à 5% en poids et de manière particulièrement préférée avec 0,7 à 2% en poids, d'un mélange, par rapport au poids total du mélange et de PE-PME et/ou de PE-PMUE, ce mélange contenant :
A) 1 à 99,9% en poids, de préférence 5 à 90% en poids, de manière particulièrement préférée 10 à 50% en poids et en particulier 10 à 25% en poids, d'au moins un additif soluble dans l'eau, qui est un mouillant, et
B) 0,1 à 99% en poids, de préférence 10 à 95% en poids, de manière particulièrement préférée 50 à 90% en poids et en particulier 75 à 90% en poids, d'au moins un additif soluble dans l'eau, qui est un polyalkylèneglycol et/ou un mono-(alkyle en C₁ à C₁₃) éther ou un di-(alkyle en C₁ à C₁₃) éther correspondant et qui est soluble à température ambiante à moins de 0,1 partie en poids dans 100 parties en poids d'eau,

11. Utilisation du PE-PME et/ou PE-PMUE modifié de manière hydrophile selon l'une ou plusieurs des revendications 1 à 9 pour la fabrication de pièces moulées.

12. Utilisation du PE-PME et/ou PE-PMUE modifié de manière hydrophile selon la revendication 11, pour la préparation de pièces moulées poreuses.

13. Utilisation du PE-PME et/ou PE-PMUE modifié de manière hydrophile selon la revendication 12, **caractérisée en ce que** la fabrication des pièces moulées poreuses est réalisée par frittage.

14. Pièces moulées en PE-PME et/ou PE-PMUE modifié de manière hydrophile selon l'une ou plusieurs des revendications 1 à 9.

15. Pièces moulées en PE-PME et/ou PE-PMUE modifié de manière hydrophile selon la revendication 14, **caractérisées en ce qu'**elles sont poreuses.
